Europäisches Patentamt

(19) European Patent Office

Office européen des brevets

(11) EP 0 374 960 B1

(12) EUROPEAN PATENT SPECIFICATION

(45) Date of publication and mention
of the grant of the patent:
**13.03.1996 Bulletin 1996/11**

(51) Int. Cl.⁶: **B60L 3/10**, B60L 15/20,
G05D 17/02, B60L 15/30,
B61C 15/12, H02P 7/63

(21) Application number: **89123824.8**

(22) Date of filing: **22.12.1989**

(54) **Control equipment of electric rolling stock**

Steuereinrichtung für elektrisch betriebenes rollendes Material

Dispositif de contrôle du matériel roulant électrique

(84) Designated Contracting States:
**DE FR**

(30) Priority: **23.12.1988 JP 323349/88**

(43) Date of publication of application:
**27.06.1990 Bulletin 1990/26**

(73) Proprietor: **HITACHI, LTD.**
**Chiyoda-ku, Tokyo 100 (JP)**

(72) Inventors:
 • **Jimbo, Yoshiji**
  **Katsuta-shi (JP)**
 • **Kawazoe, Takeshi**
  **Yokohama-shi (JP)**
 • **Tsuboi, Takashi**
  **Katsuta-shi (JP)**
 • **Miyashita, Tomoharu**
  **Katsuta-shi (JP)**
 • **Yamaguchi, Hiroshi**
  **Katsuta-shi (JP)**

(74) Representative: **Strehl Schübel-Hopf Groening &**
**Partner**
**Maximilianstrasse 54**
**D-80538 München (DE)**

(56) References cited:
**DE-A- 3 242 553        GB-A- 1 209 421**
**US-A- 3 911 343**

 • **PATENT ABSTRACTS OF JAPAN, vol. 3, no. 53**
  **(M-058), 8 May 1979 ; & JP-A-54 031 108**
 • **PATENT JOURNAL, Derwent Publications Ltd.,**
  **London, GB ; Accession No. 82-F0336E ; & ZA-**
  **80 08 083**

## Description

BACKGROUND OF THE INVENTION

The present invention relates to an operation support system of electric rolling stock and more particularly to an acceleration control equipment of electric rolling stock.

For electric rolling stock in which the number and the weight of non-powered rolling stock (such as freight cars and passenger cars) that are tracted are varied, it has been heretofore left to the ability of an operator to set notches forward at the time of acceleration of the electric rolling stock. That is, if notches are set forward too fast when freight cars loaded with heavy cargo are being tracted, slip is caused, and on the contrary, if notches are set forward slowly, acceleration is delayed causing disturbance in a train service schedule. Further, in case the electric rolling stock is accelerated in a single operation or with a light load, the electric rolling stock is accelerated suddenly if notches are set forward quickly, which is very dangerous at the time of coupling freight cars for instance. Such problems could occur particularly in the case when an electric locomotive tracts freight cars having different loadage from day to day.

In local passenger transport systems, the ratio of trailer cars (non-powered cars) to motor cars is fixed and the load varies between the load when no passenger exists and the load with no vacancy, but this varying width is very small as compared with the varying range of the load tracted by an electric locomotive (for example, from a single locomotive to 100 freight cars coupled in succession) and is corrected by means of a load detecting device which corrects the tractive force in accordance with the load detected by the load (passengers' weight) detecting device provided on a bogie, etc. of the electric rolling stock, thus obtaining almost constant acceleration for the load within said varying range. For example, however, when a train is formed so as to add trailer cars only, a load which largely deviates from above said varying range is produced, and the correcting range by the load detecting device is exceeded already. Therefore, it is not possible to obtain a predetermined acceleration. Accordingly, when approximately 30 notches are provided similarly to an electric locomotive and the operator performs current (tractive force) control by his own ability for the purpose of constant acceleration control in electric rolling stock instead of performing control with feedback of a motor current, flexible accommodation may be effected even when trailer cars only are added. In this case, however, abovementioned problems still occur because acceleration (powering) operation is entirely left to the ability of the operator as described above.

As to acceleration control of a train, the following technique has been heretofore known.

A method of acceleration control of a diesel locomotive is described in Japanese Patent Publication Number SHO48-21442 (well-known example 1) and Japanese Patent Application Laid-Open Number SHO55-123559 (well-known example 2).

The technique described in the well-known example 1 discloses that a notch that exists between a load resistance corresponding to the load and the adhesion limit is set by means of a limit notch setting circuit and notches are time set forward up to the notch of a powering instruction when powering control is made on a diesel locomotive. Also, the well-known example 2 discloses a technique of altering the setting forward time limit by feeding back the acceleration in the time limit setting forward device of the diesel locomotive described in the abovementioned well-known example 1.

However, since setting forward of notches is performed through the time limit with a timer in the former, acceleration is delayed substantially in the case of heavy load, which is not preferable in point of train service control under the present state that the railway schedule has become overcrowded. In the latter, there is a possibility to create slip in case of a heavy load because the setting forward time limit is altered by the acceleration.

Further, a powering control technique of an electric locomotive is disclosed in Japanese Patent Laid-Open Number SHO55-127807 (well-known example 3). With the technique described therein, there is provided a notch automatic setting forward position in a master controller and a main circuit current pattern corresponding to a main circuit current instruction value is varied proportionally in accordance with a handle angle. With this technique, however, setting is also made freely at a position of the master controller, so powering control has to be left to the ability of the operator eventually.

Since no attention is paid at all to a varying load in the abovementioned prior art, problems of acceleration delay and slip are created in the well-known examples 1 and 2. In the well-known example 3, constant current control (steps are produced because of resistance setting, but almost constant current control) is employed, and no attention is paid to the weight and the speed. In particular, in the case when an electric locomotive tracts a heavy load, the electric locomotive is operated on the boundary of not to slip while yielding the maximum output. Therefore, when travelling is performed at a constant current from the start, a large output is generated at the time of start, thus resulting in slip. Also, when the speed reaches a high level, the adhesion limit is also exceeded to cause slip. Accordingly, there has been such a problem that the operator has to interpose so as to prevent the slip.

A further control equipment for an electric rolling stock is disclosed in DE-A-32 42 553. This equipment is provided with an automatic acceleration controller which adjusts the tractive force of each motor depending on a detected load of the car so that a predetermined acceleration is achieved. This system has the disadvantage that starting a stopped train from the beginning with a predetermined constant acceleration results in that the train pulls up with a jerk. The jerk is uncomfortable for passengers, stresses the coupling equipment between the cars of the train and may cause the wheels to slip. In case of slipping wheels, the system tries to start the train again with a smaller acceleration. The system also requires that all cars of the train are provided with a load detector.

Another system which is provided with an automatic acceleration rate controller is disclosed in US-3 911 343. Also this system utilizes a load detector and allows the operator only to input a predetermined acceleration so that the disadvantages are the same as in the previously mentioned systems.

## SUMMARY OF THE INVENTION

It is an object of the invention to provide a control equipment for an electric rolling stock which is easy and convenient to drive but still allows to pull up smoothly even under difficult conditions. The solution of this object is achieved by the control equipment set forth in claim 1.

In an implementation of the invention, there is provided a control equipment of electric rolling stock for driving the electric rolling stock by selecting with notches a speed-tractive force characteristic corresponding to the notch of a master controller, comprising:

means for setting a tractive force against a speed (including an equivalent value which can be converted into a speed such as motor rotating speed, motor current and motor voltage) of this electric rolling stock;

means for controlling the motor of the electric rolling stock based on the output of this setting means; and

means for changing over the output of a speed-tractive force characteristic corresponding to said notches to and from the output of the tractive force setting means.

In a further implementation of the invention, there are provided, in the control equipment of electric rolling stock, means for detecting the speed and the main motor current of a travelling electric rolling stock and means for inputting this detected value so as to compute the condition of a load to be tracted by this electric rolling stock.

## Operation

Means for setting the tractive force against the speed of electric rolling stock can set a tractive force in regard to the speed which is desired to be tracted by the electric rolling stock. That is, when a tractive force which exceeds a load to be tracted and a travelling resistance is output, the electric rolling stock is accelerated. Moreover, this tractive force is a function corresponding to the speed, and is set, for example, so as to reduce the tractive force in the speed region where slip is likely to occur. Therefore, the operator is not required to operate manually by himself at the time of powering operation. Further, when the operator desires to operate manually, he may handle conventional manual notches by operating a change-over means.

Furthermore, a load which is tracted by electric rolling stock can be computed by obtaining the speed and the current of the main motor of electric rolling stock during accelerated travelling. By inputting this computed result in a tractive force setting means, data for automatically accelerated operation are obtainable.

## BRIEF DESCRIPTION OF THE DRAWINGS

Fig. 1 is a control block diagram showing an embodiment of the present invention;
Fig. 2 is a speed-tractive force characteristic diagram selected by means of notches;
Figs. 3(a) and (b) show speed-tractive force patterns according to the present invention;
Fig. 4 shows a slip frequency arithmetic portion;
Fig. 5 shows a load condition setting device which is an embodiment of the present invention;
Fig. 6 is a flow chart showing how to form a speed-tractive force pattern according to the present invention;
Fig. 7 is a flow chart for selection of load condition according to the present invention;
Fig. 8 is a block diagram for automatic load detection in an embodiment of the present invention;
Fig. 9 shows an operator's seat of electric rolling stock to which the present invention is applied;
Fig. 10 shows a master controller according to the present invention;
Fig. 11 shows a tractive force-brake force indicator according to the present invention.

## DETAILED DESCRIPTION OF THE INVENTION

In general, operation of electric rolling stock is considered to be comparatively difficult. The reason is that, when an electric locomotive is accelerated, the load is varied largely depending on the number of formation of coupled non-powered passenger cars and freight cars, thus requiring to vary the way of setting forward as many as 30 notches or a stepless notch. The setting forward of these notches has been left to the ability of veteran operators, who seized the weight of passenger cars and freight cars based on their past experience and conducted fine operation by selecting notches while looking at the motor current related directly to the tractive force of an electric locomotive. The operation of the electric locomotive being difficult as described above, the operation could not be conducted by anyone.

Also, some electric rolling stocks are provided with an equipment which detects the load and corrects the tractive force in accordance with the load.

This is materialized because the load range for one set of motor of the electric railcar is limited. However, in case trailer cars (rolling stock with no motor mounted) are increased by change of the formation of train, etc., it happens sometimes that correction can no longer be made and a predetermined acceleration cannot be attained.

It is an object of the present invention to solve abovementioned problems.

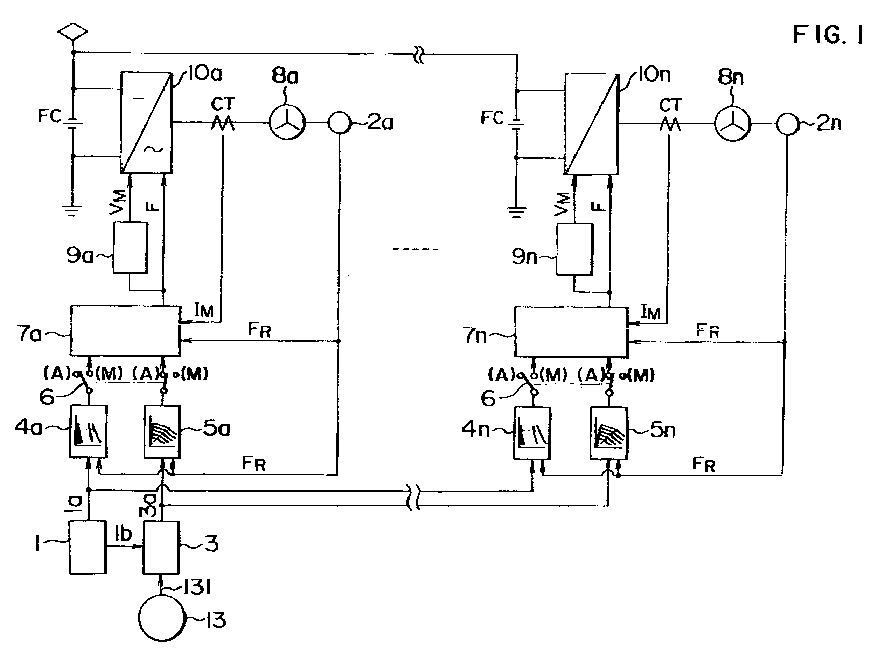

An embodiment of the present invention will be described hereafter with reference to Fig. 1 through Fig. 11.

Fig. 1 is a control block diagram of an electric locomotive, in which n sets of induction motors are controlled by n sets of inverters.

(1) When an electric locomotive is accelerated manually:

The operator throws a manual-automatic changeover switch 6 onto a manual side M, and then operates a master controller 1. The master controller 1 outputs a notch instruction 1a corresponding to the handle position thereof, and the output is input to tractive force characteristic portions 4a to 4n. The tractive force characteristic portions 4a to 4n output speed-tractive force characteristics corresponding to the notch instruction, and these outputs are applied to slip frequency arithmetic portions 7a to 7n through the changeover switches 6. In the slip frequency arithmetic portions 7a to 7n, a slip frequency $F_S$ for outputting a given tractive force is computed and is added to a speed instruction (rotor frequency $F_R$), thus outputting an inverter frequency F (described later). The inverter frequency F is input to modulation factor arithmetic portions 9a to 9n, and the modulation factor $V_M$ corresponding to the inverter frequency F is output.

The inverter frequency F and the modulation factor $V_M$ are given to inverters 10a to 10n, which output three phase alternating current so as to drive induction motors 8a to 8m. Besides, FC denotes a filter capacitor and CT denotes a current sensor for detecting the motor current. The motor current $I_M$ which is an output of the current sensor CT is input to the slip frequency arithmetic portions 7a to 7n and is used as the condition in computing the slip frequency.

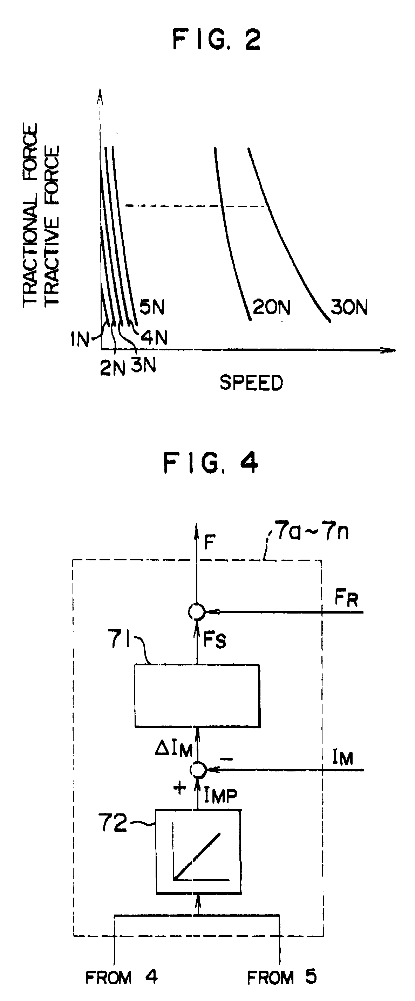

Fig. 2 shows an example of a speed-tractive force characteristic which has been stored inside the speed-tractive force characteristic portions 4a to 4n selected by notches.

Speed-tractive force characteristics corresponding to the notch positions of the handle of the master controller 1 are selected (here 1N to 30N). The operator selects and sets forward 30 notches thereby to control acceleration corresponding to the rise in speed of the electric locomotive while looking at an ammeter and a speedmeter located on an operator's stand.

(2) When an electric locomotive is accelerated automatically:

The operator throws the manual-automatic changeover switch 6 shown in Fig. 1 onto the automatic (A) side, and sets the tractive force (described later) which is desired to be output in the operation this time by a load condition setting device 13, thus operating the master controller 1. When the master controller is set to an automatic acceleration start mode not shown, the electric locomotive starts to be accelerated.

A load condition signal 131 which is output from the load condition setting device 13 (described later) is input to an operation information device 3, and load condition is stored. Next, when the operator operates the master controller 1 and sets it to an automatic acceleration start mode, a start signal 1b is input to the operation information device 3, and the operation information device 3 outputs an automatic acceleration operation instruction 3a corresponding to stored load condition. This automatic acceleration operation instruction 3a is input to the tractive force pattern arithmetic portions 5a to 5n.

The tractive force instruction suitable for load condition may be computed finely in these tractive force pattern arithmetic portions 5a to 5n, but a case in which a tractive force instruction for a speed corresponding to load condition is stored as a pattern in advance, will be described as a simplified case.

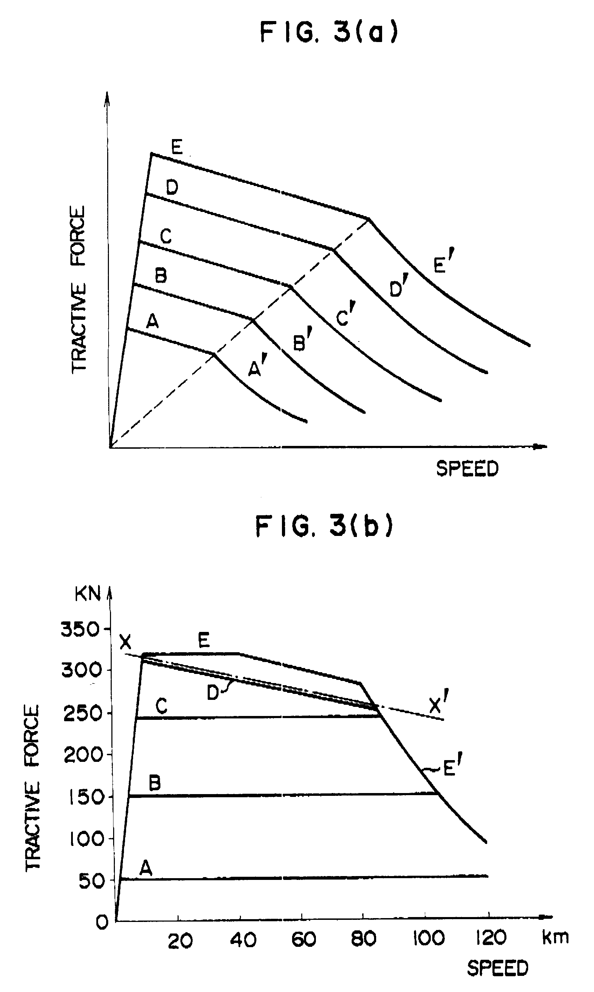

Fig. 3 (a) shows an example of this speed-tractive force characteristic pattern. Here, a speed-tractive force pattern in 5 steps A to E is shown as an example. The pattern A shows a case of single electric locomotive, the pattern B shows a case of tracting a light load, the pattern C shows a case of tracting an intermediate load and D shows a case of tracting a heavy load. Also, a pattern E shows maximum output pattern of an electric locomotive, and is used for gradient start of a heavy load.

Here, there are only five steps of patterns, but the number of steps may be increased. When the load conditions are specified minutely, it is only required to create speed to tractive force patterns corresponding to load conditions and to store them in the pattern arithmetic portions 5a to 5n. Furthermore, in those patterns, the travelling resistance of the rolling stock is taken into consideration in addition to the weight which is tracted practically. In other words, these patterns are added by approximately 5% to the load conditions that are input.

Now, it is assumed that the pattern B has been selected among above said patterns. To these pattern arithmetic portions 5a to 5n, the speed signal $F_R$ from the speed sensors 2a to 2n is input, respectively.

A tractive force instruction corresponding to the speed signal $F_R$ of the pattern B is given to the slip frequency arithmetic portions 7a to 7n through the changeover switch 6 which has been thrown onto the automatic (A) side.

Hereupon, when the speed to tractive force pattern shown in Fig. 3 (a) is observed, it is found that the curve does not attain to a desired tractive force suddenly but rises gradually in the low speed region. This is because of the fact that it is arranged to avoid a sudden acceleration until the coupled portion is fully extended when an electric locomotive starts to travel with a plurality of freight cars connected thereto.

Also, the portion on the left side of the dotted line portion of this pattern has a feature of slightly going down to the right since lowering of expected adhesion factor for the speed is taken into consideration, and the pattern may be determined to the actual condition. In particular, when the electric locomotive tracts freight cars of heavy load, it is operated at a boundary of adhesion between the wheel and the rail. Therefore, slip will occur unless the tractive force is lowered with the increase of speed. The regions A′ to E′ on the right side of the dotted line portion are called a motor characteristic region, and are distributed taking the maximum output E of the electric locomotive into consideration. That is, E′ is a threshold characteristic and patterns A′ to D′ below E′ may be determined freely. Therefore, being different from the Figure, maximum speeds of all characteristics may also be made to accord with each other.

Fig. 3 (b) shows a speed to tractive force pattern in close touch with reality. In the Figure, A to B are similar to those shown in Fig. 3 (a). The pattern from E to E′ shows the maximum output of an electric locomotive, and any output over said maximum output cannot be expected. When Fig. 3 (b) is compared with Fig. 3 (a), it is noticed that the patterns A to C are different from those in Fig. 3 (a). The reason why a fixed tractive force is adopted for A to C except the start time is to have the acceleration fixed. In particular, it is preferable to fix the acceleration in the case of passenger cars when a comfortable ride in the car is considered.

The line X-X′ in the Figure shows the adhesion threshold when an electric rolling stock tracts a heavy load in the rain, and the heavy load pattern D is set slightly lower than the line X-X′. The pattern E also shows the maximum output of the electric rolling stock as described previously. It seems that no slip occurs on a flat street in fine weather. However, it is also required to conduct powering after sand dissemination in gradient starting while tracting a heavy load. E′ shows a pattern which decreases in reverse proportion to the speed in the motor characteristic region.

The outputs of the tractive force pattern arithmetic portions 5a to 5n shown in Fig. 1 are input to slip frequency arithmetic portions 7a to 7n.

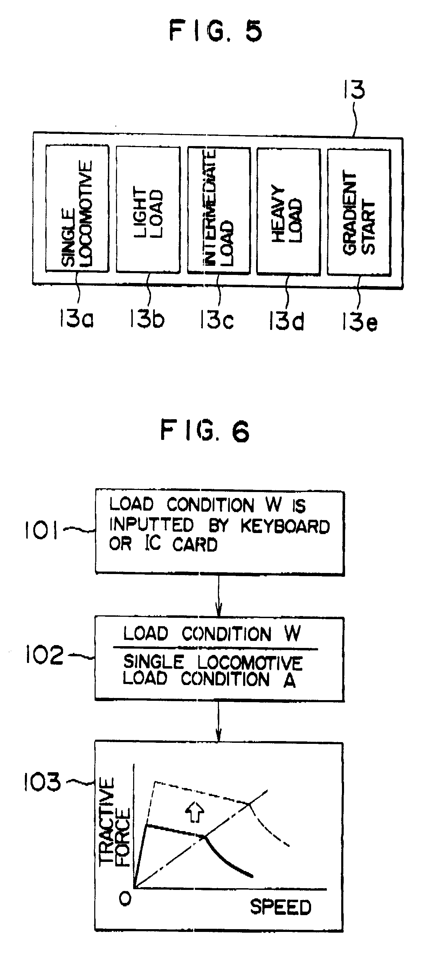

Here, the slip frequency arithmetic portions 7a to 7n will be described with reference to Fig. 4.

A tractive force instruction which is output from the tractive force characteristic portions 4a to 4n or the tractive force pattern arithmetic portions 5a to 5n is input to a tractive force-motor current pattern 72, and is output as a current instruction $I_{MP}$. The deviation $\Delta I_M$ between this current instruction $I_{MP}$ and the motor current $I_M$ which is the output of the current detector CT is obtained and input to a slip frequency arithmetic circuit 71. A slip frequency $F_S$ corresponding to this deviation $\Delta I_M$ is output and added to the rotor frequency $F_R$, thereby to obtain an inverter frequency F (at the time of acceleration). As described previously, a modulation factor $V_M$ is obtained from the inverter frequency F, and both the inverter frequency F and the modulation factor $V_M$ are input to the inverters 10a to 10n, thereby to drive induction motors 8a to 8n.

In the next place, a load condition setter 13 will be described.

The load condition means a tractive force, which, when it is assumed that fifty freight cars having a capacity of 1,000 tons are coupled with an electric locomotive for instance, is able to tract these freight cars at an acceleration to some degree. In other words, the load condition means a tractive force expected for an electric locomotive or a tractive force which is desired to have the electric locomotive output.

Accordingly, if the condition is set which is larger than the load, the acceleration is increased as a matter of course. Since the load size itself is set usually (for example, 1,000 t), the load condition may be considered as the load size which has to be tracted by the electric locomotive.

Fig. 5 shows a button-switch type load condition setter 13. The switch consists of five steps, viz., a single rolling stock 13a, a light load 13b, an intermediate load 13c, a heavy load 13d and a gradient start 13e. These buttons correspond to A to E in Figs. 3(a) and (b). The gradient start 13e in this case is the gradient start at the time of heavy load. When the gradient start is made with a single rolling stock, it is only required to set the light load 13b by raising the tractive force by one step.

Also, setting may be made in such a manner that it is arranged so that the gradient start button does not work independently, and when AND state is obtained with any of load buttons 13a to 13d, the gradient start will work at that load. Referring to Figs. 3(a) and (b), the curve C is used when the AND state between B and gradient start is obtained , and the curve E is used when the AND state between D and gradient start is obtained.

Since the operator can recognize the operation schedule and the loads by a railroad schedule delivered to him at the time of starting the operation, the operator makes setting by pressing down the pushbutton switch 13 on the operator's stand in accordance with the information given.

It should be noted that similar operation can be performed by using a rotary switch in place of the pushbutton switch.

In case of abovementioned two methods, a signal is usually transferred to the next stage after providing potential difference by the use of a resistor or the like. However, since most of the programs in the next stage and thereafter are composed digitally, it is more convenient to digitize the signal than to leave it as it is. Further, the number of straight pull lines is also reduced by digitizing. For example, in case three straight pull lines are connected to said pushbutton switch or rotary switch, coding is made as shown in the following table naming three straight pull lines a, b and c, respectively.

Table

| straight pull line | a | b | c |
|---|---|---|---|
| single rolling stock | 0 | 1 | 1 |
| light load | 0 | 1 | 0 |
| intermediate load | 1 | 1 | 0 |
| heavy load | 1 | 1 | 1 |
| gradient start | 1 | 0 | 1 |

The code "1" in the above table shows that the straight pull line is connected to the power supply. It is possible to correspond to eight load conditions at the maximum by using three straight pull lines.

Next, a case in which setting is made by using a keyboard or an IC card.

It is also possible that the operator sets the load condition which is given immediately before he attends to work by means of a keyboard, and that he sets with an IC card which is delivered immediately before he attends to work and with load condition input in advance.

In these cases, the conditions do not often agree with above-described five steps.

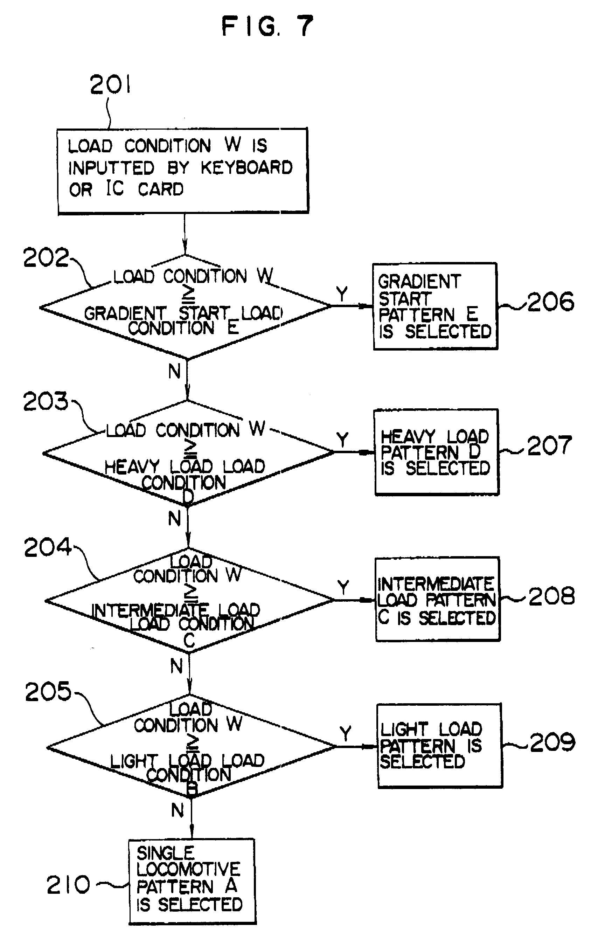

In such a case, for example, a method in which computation is performed to find out how many times the set load condition in the case of a single rolling stock (the curve A of Figs. 3(a) and (b)) is and a pattern corresponding to the multifying factor is formed in advance, a method of selecting a load condition which is over the set condition and closest thereto and so forth may be considered. Fig. 6 and Fig. 7 show these flow charts. Fig. 6 will be explained first.

In a step 101, the load condition W for the operation this time is inputted by a keyboard or an IC card (corresponding to the load condition setter 13 shown in Fig. 1). Then, the load condition W which was inputted previously is divided by the load condition A (the weight of an electric locomotive itself) when the electric locomotive is operated alone (the step 102). With this, it is found how many times of loads are applied as compared with a single rolling stock operation, and it is also found how much tractive force will be required to obtain a predetermined acceleration. In other words, only upward parallel displacement of the curve A in Figs. 3(a) and (b) by a value corresponding to the above-described multiplying factor (the value being a multiplying factor itself sometimes) (the step 103) is required. In this case, it is not required to have a plurality of patterns of the tractive force pattern arithmetic portions 5a to 5n as shown in Figs. 3(a) and (b), but it is required to store the pattern A under the minimal load condition only. Also, the device for this flow chart only needs to be provided in the tractive force pattern arithmetic portions 5a to 5n.

Next, explanation will be made with reference to Fig. 7. In the step 201, the load condition W is input by a keyboard or an IC card. In the step 202, the magnitude of the load condition W which is input in the step 202 is compared with the magnitude of the load condition E at the time of gradient start (load condition when the curve E of Figs. 3(a) and (b) is selected), and when load condition $W \geq$ load condition E is satisfied, the curve E of Figs. 3(a) and (b) is selected in the step 206. Similar comparison is made thereafter in the step 203 through the step 205, and the curve to be selected is determined when the condition is satisfied. Further, in case the condition is not satisfied to the last, the curve A of Figs. 3(a) and (b) which is a pattern in case of a single rolling stock is selected. These are also provided in the tractive force pattern arithmetic portions 5a to 5n shown in Fig. 1.

Next, an embodiment in which an electric locomotive itself determines the load condition automatically.

The setting of the load condition which has been heretofore described is of a system in which the load condition tracted by an electric locomotive is input from the outside, but it becomes much more convenient if the setting can be performed without assistance.

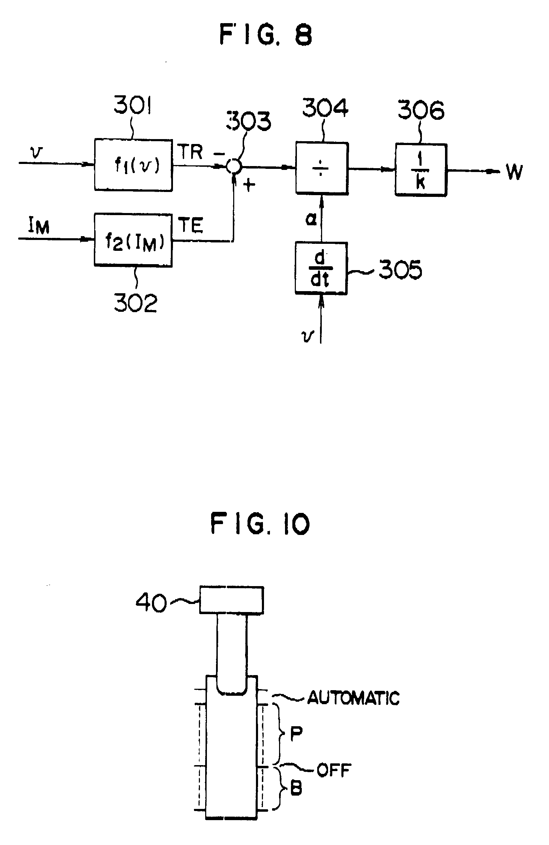

Explanation will be made hereafter with reference to Fig. 8. Fig. 8 is a block diagram showing an example of computation of the load condition.

Hereupon, a relation shown with the following expression is obtained among the load condition (train weight) W of an electric locomotive, an acceleration $\alpha$ and a tractive force TE.

$$TE = KW\alpha + TR \qquad (1)$$

Here, K is a constant and TR is a travelling resistance.

Further, the travelling resistance TR is a function of a train speed v, and the tractive force TE can be expressed with a function of the main motor current $I_M$ and the speed v. Furthermore, the acceleration $\alpha$ is a time difference of the speed v. Thus, the expression (1) may be expressed as follows.

$$f_2(I_M, v) = KW\frac{dv}{dt} + f_1(v) \qquad (2)$$

When the expression (2) is transformed in an expression of the load condition (train weight) W, the following expression is obtained.

$$\{f_2(I_M, v) - f_1(v)\} / dv/dt \cdot \frac{1}{K} = W \qquad (3)$$

What is realized from this expression (3) is that, when the train speed v and the main motor current $I_M$ are known, the load condition W at that time can be computed. Next, it will be explained how the load condition is computed by referring to Fig. 8.

By inputting the train speed v, the travelling resistance TR is computed in a travelling resistance arithmetic portion 301. Further, by inputting the main motor current $I_M$, the tractive force TE is computed in a tractive force arithmetic portion 302. The difference between the travelling resistance TR and the tractive force TE is obtained by a subtracter 303 and is input to a divider 304. On the other hand, the speed v is applied with time differentiation in a differentiator 305 and is input to the divider 304 thereafter. The result obtained by multiplying this output by 1/K in a multiplier 306 is the load condition W. By inputting this load condition W to the tractive force pattern arithmetic portion 5a to 5n through an operation information device 3 of Fig. 1, an optimum speed-tractive force pattern is selected as described above, and the electric locomotive is started at substantially constant acceleration under any load condition.

Next, the way of measurement of the train speed v and the main motor current $I_M$ will be described. It is realized that the acceleration is put in a denominator in the abovementioned expression (3). Therefore, measurement has always to be taken under an accelerated state. In a first measuring method, a rolling stock is tracted with a tractive force in case of single rolling stock operation after the coupled portion between rolling stocks is extended at a super-low speed. If the output of a speed measuring equipment (well-known equipment such as a tacho-generator, a pulse generator and an encoder) does not rise at this time, the tractive force at the time of next light load is made to output. Since the acceleration is produced as the speed rises, the train speed v and the main motor current $I_M$ at that time (in case of a plurality of motors, a value converted in a value per one motor, or a total current value, in which, however, conversion is made to a value per motor in the tractive force arithmetic unit 302) are measured. In this method, however, it takes long time for measurement. Therefore, in the second method, a tractive force which tracts the load condition which is a half of the load condition tracted frequently by that electric locomotive is made to output. For example, when freight cars of 1,000 tons are tracted frequently, the freight cars are made to travel for measurement with the tractive force required to tract freight cars of 500 tons with a predetermined acceleration (it is desired to perform powering with substantially constant acceleration in normal travelling under any load condition, not in travelling for measurement, but the acceleration at that time is indicated). In many cases, the electric locomotive does not slip, but performs powering with an acceleration smaller than that in ordinary powering.

By measuring the speed v and the main motor current $I_M$ at this time, the load condition W may be computed. When the weight (load condition) of the tracted freight cars is considerably small, for example, less than 500 tons in the above example, the tractive force of the electric locomotive tracting the freight cars becomes excessive. At this time, an acceleration detector works to reduce the speed. Then, in the next travelling for measurement, powering is performed with further smaller tractive force, thus measuring the train speed v and the main motor current $I_M$.

As described above, the train speed v and the main motor current $I_M$ are obtained, and the load condition W is computed with the arrangement shown in Fig. 8. At this time, it is required to increase the accuracy of the travelling resistance arithmetic portion 301 in order to obtain the load condition W with further higher accuracy.

For example, by means of information of railroad (curve resistance and gradient resistance, etc.) on which travelling of this train is scheduled and a train position detecting unit which detects the current location of travelling, it is made to recognize on what state of railroad the rolling stock are travelling and the value added with travelling resistance by curve or gradient is made to be the travelling resistance TR thereby to obtain the load condition W with high accuracy.

When such an automatic load detecting unit as described above is mounted on the load condition setter 13, the operator only needs to set to the start mode for the electric locomotive to perform powering automatically.

Further, by combining the automatic load detecting device with abovementioned load condition setting switch, erroneous input by the operator may be corrected.

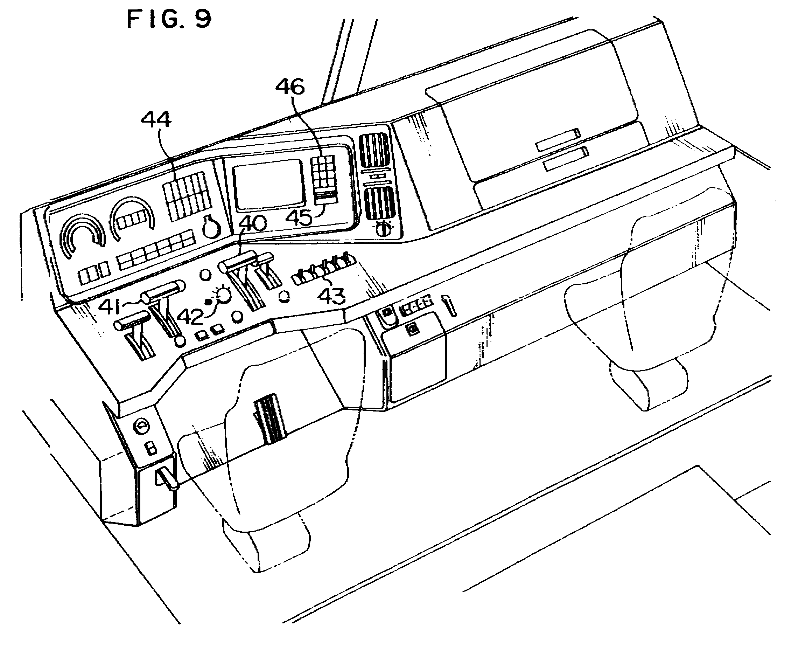

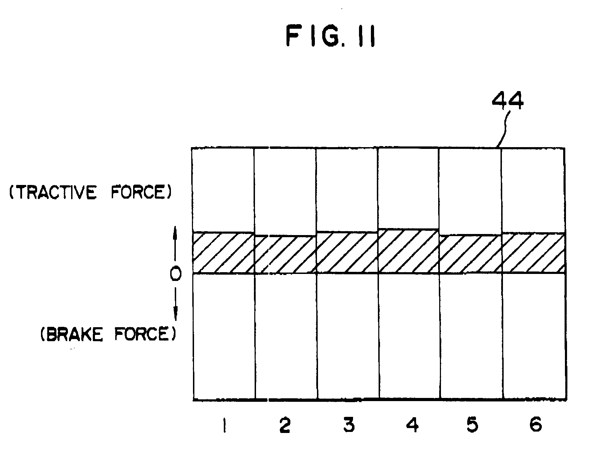

Next, the operation of performing powering practically is shown with reference to Fig. 9 and Fig. 10.

When the operator desires manual acceleration, a master controller handle 40 (see Fig. 10) is tilted from the off position to the powering P side. The operator sets forward the master controller handle 40 provided with 30 notches fractionally while watching a tractive force meter 44 so that neither rapid acceleration nor slip may occur.

Here, the tractive force meter 44 will be described briefly.

Conventionally, in an electric locomotive using a d.c. motor, the tractive force was a function of the main motor current. Therefore, it was possible for the operator to operate the electric locomotive by watching the main motor ammeter. However, in an electric locomotive using an induction motor which is driven by an inverter as a main motor, the tractive force is not necessarily a function of the main motor current. Therefore, it is difficult to operate the electric locomotive only by watching the main motor current. So, a tractive force meter which is able to read the tractive force directly is required.

Fig. 11 shows the appearance of the tractive force meter 44. The Figure shows a tractive force meter 44 in the case of an electric locomotive with six units of induction motors mounted thereon. The upper part thereof shows the tractive force and the lower part thereof shows the brake force when a regenerative brake is used. The level of the tractive force (brake force) is shown with a bar graph, and the tractive force meter 44 is composed of indicators such as photodiodes, liquid crystal display and the like. The tractive force may readily be obtained from the slip frequency $F_S$ in the slip frequency arithmetic portions 7a to 7n.

Next, a case in which the operator desires automatic acceleration will be described. When the operator sets a load condition setting switch 42 to the mode corresponding to the current load condition and moves the master controller handle 40 to the automatic position, the train is accelerated automatically. Then, the master controller handle 40 is set to an off position when a desired speed is reached, thereby to perform coasting operation.

As to setting the load condition, there are such methods that input is made by means of a keyboard 46 and that input is made by inserting an IC card into an IC card inserting port 45. When these input methods are provided on the operator's stand, it is required to provide a means which puts an priority on an input method and cancels the others.

In the previous embodiment, it has been described that automatic acceleration is started when the master controller handle 40 is simply thrown onto the automatic side. However, there is also another method such that the automatic accelerating operation is started only when the handle 40 is moved from the off position to the automatic position (when the coasting state including suspended state of the locomotive is switched to the automatic position). Thus, variety of systems may be set along with the way of handling the operation.

Furthermore, it is possible to switch manual to and from automatic by providing, for example, a manual-automatic changeover switch 43. At this time, the automatic acceleration start instruction is given only to throw the master controller handle 40 to the P side (any notch will do), and it is not required to provide an automatic position.

Besides, the numeral 41 of Fig. 9 denotes a brake valve handle, and the electric locomotive reduces the speed by adjusting this handle. It should also be noted that the powering handle and the brake handle are separated from each other in Fig. 9, but that a brake portion B may be provided on the master controller handle 40 as shown in Fig. 10.

In the foregoing, a case in which freight cars are tracted by a single electric locomotive and a case in which a single locomotive is travelling are shown, but the tractive force is insufficient particularly in case a plurality of freight cars are tracted along a sharp gradient. In such a case, two or more electric locomotives are coupled so as to tract freight cars.

In this case, a straight pull line may be employed for an instruction line of the control system. When electric locomotives are coupled in double, a tractive force which is almost double of the tractive force by a single locomotive is obtainable. Therefore, if electric locomotives are coupled in double under the same load condition, the acceleration reaches over an expected acceleration. Therefore, in the case of double coupling, an expected acceleration is obtained by providing a mode for reducing the tractive force to almost a half of the tractive force of a single electric locomotive.

For example, with reference to Fig. 3 and Fig. 5, when it is judged that the operation that time is for intermediate load from the total weight of freight cars, the operator presses an intermediate load selection switch 13c (in case of a rotary switch, the operator sets to the graduations thereof). In case of an operation with double coupling, a double coupling switch not shown is pushed so as to complete setting. The speed-tractive force pattern at this time becomes a pattern in the vicinity of the curve A. In case of a triple coupling, about one-third of the tractive force will do. Thus, the same operation is materialized with a similar structure.

It should be noted that the induction motor control using an inverter has been described in abovementioned embodiments, but that it is needless to say that the same control may be realized similarly for the d.c. motor control using a chopper device.

Also, the electric locomotive has been described in the abovementioned embodiment, but it is readily diverted to a case in which trailer cars are added to the electric rolling stock.

According to the present invention, it is possible to perform powering operation only in that the operator initializes the load condition prior to starting an electric rolling stock. Furthermore, when the operator desires manual operation, the mode may be changed over to the manual mode only by handling a switch.

Thus, powering operation which has been heretofore considered very difficult becomes simple. Therefore, it is possible to lighten the burden of the operator. Further, the operation in a marshalling yard or in a station precinct can be performed freely by manual control.

Furthermore, the electric rolling stock sets the load condition by itself only by setting to the automatic acceleration side instead of setting the load condition in various ways, thus making handling simpler.

## Claims

1. A control equipment for an electric rolling stock, comprising:

    means (7a to 7n) for controlling a motor (8a to 8n) of said rolling stock on the basis of a tractive force instruction,

    means (13) for inputting a load to be pulled by said electric rolling stock, and

    first means (5a to 5n) for providing automatic acceleration and generating an instruction on the tractive force, depending on the speed of said rolling stock and said load condition,

    characterized by

    second means (4a to 4n) for providing manual acceleration and generating an instruction on the tractive force in accordance with a tractive force-speed-characteristic associated with a selected notch of a master control device (1), and

    manual-automatic changeover switching means (6) for supplying either the output of said first or that of said second means (5a to 5n; 4a to 4n) for generating an instruction on the tractive force to said means (7a to 7n) for controlling the motor of said electric rolling stock.

2. A control equipment of an electric rolling stock according to claim 1, wherein said input means (13) is a selecting means for selecting any of a plurality of load conditions.

3. A control equipment of an electric rolling stock according to claim 1 or 2, wherein said input means (13) is a keyboard.

4. A control equipment of an electric rolling stock according to claim 1 or 2, wherein said input means (13) is provided with a memory means in which the load condition has been input in advance prior to the operation of said electric rolling stock.

5. A control equipment of an electric rolling stock according to claim 4, wherein said memory means (3) is a memory means of a card system provided with an integrated circuit.

6. A control equipment of an electric rolling stock according to anyone of claims 1 to 4, wherein said input means (13) is provided on the operator's stand in said electric rolling stock.

7. The control equipment of an electric rolling stock according to claim 1, comprising:
    means (2a to 2n, CT) for detecting a speed and a main motor current of an electric rolling stock during travelling; and
    means (301, 302, 304, 305, 306) for receiving this detected value and computing the load to be tracted by this electric rolling stock.

## Patentansprüche

1. Steuervorrichtung für ein elektrisches Fahrzeug, umfassend:
    eine Einrichtung (7a bis 7n) zur Steuerung eines Motors (8a bis 8n) des Fahrzeugs auf der Grundlage eines Zugkraftbefehls,
    eine Einrichtung (13) zur Eingabe einer von dem Fahrzeug zu ziehenden Last, und
    eine erste Einrichtung (5a bis 5n), um in Abhängigkeit der Fahrzeuggeschwindigkeit und des Last-Zustands einen Zugkraftbefehl zu erzeugen und eine automatische Beschleunigung zu bewirken,
    gekennzeichnet durch
    eine zweite Einrichtung (4a bis 4n), um einen Zugkraftbefehl zu erzeugen, der einer einer Stellung einer Hauptsteuereinrichtung (1) zugeordneten Zugkraft-Geschwindigkeits-Kennlinie entspricht, und eine manuelle Beschleunigung zu bewirken, und
    eine Automatik-Manuell-Umschalteinrichtung (6), um entweder die Ausgabe der genannten ersten oder diejenige der genannten zweiten Einrichtung (5a bis 5n; 4a bis 4n) zur Erzeugung eines Zugkraftbefehls für die genannte Einrichtung (7a bis 7n) zur Steuerung des Motors des elektrischen Fahrzeugs zur Verfügung zu stellen.

2. Steuervorrichtung nach Anspruch 1, wobei die Eingabeeinrichtung (13) eine Auswahleinrichtung zur Auswahl eines einer Vielzahl an Lastzuständen darstellt.

3. Steuervorrichtung nach Anspruch 1 oder 2, wobei die Eingabeeinrichtung (13) eine Tastatur darstellt.

4. Steuervorrichtung nach Anspruch 1 oder 2, wobei die Eingabeeinrichtung (13) mit einer Speichereinrichtung versehen ist, in die der Last-Zustand vor dem Betrieb des elektrischen Fahrzeugs eingegeben worden ist.

5. Steuervorrichtung nach Anspruch 4, wobei die Speichereinrichtung (3) die Speichereinrichtung eines mit einer integrierten Schaltung versehenen Kartensystems darstellt.

6. Steuervorrichtung nach einem der Ansprüche 1 bis 4, wobei die Eingabeeinrichtung (13) am Bedienungsstand des elektrischen Fahrzeugs vorgesehen ist.

7. Steuervorrichtung nach Anspruch 1, mit:
    einer Einrichtung (2a bis 2n, CT) zur Erfassung einer Geschwindigkeit und eines Hauptmotorstroms eines elektrischen Fahrzeugs während der Fahrt; sowie
    einer Einrichtung (301, 302, 304, 305, 306) zur Aufnahme des erfaßten Wertes und zur Berechnung der Last, die das elektrische Fahrzeug ziehen muß.

## Revendications

1. Equipement de commande pour un matériel roulant électrique, comprenant :
    des moyens (7a à 7n) pour commander un moteur (8a à 8n) dudit matériel roulant sur la base d'une instruction de force de traction,
    des moyens (13) pour entrer une charge devant être tractée par ledit matériel roulant électrique, et
    des premiers moyens (5a à 5n) pour réaliser une accélération automatique et produire une instruction concernant la force de traction, en fonction de la vitesse dudit matériel roulant et de ladite condition de charge,
    caractérisé par
    des seconds moyens (4a à 4n) pour réaliser une accélération commandée à la main et produire une instruction concernant la force de traction en fonction d'une caractéristique force de traction - vitesse associée à un cran sélectionné d'un dispositif de commande maître (1), et
    des moyens de commutation manuelle-automatique (6) pour envoyer le signal de sortie desdits premiers moyens ou desdits seconds moyens (5a à 5n ; 4a à 4n) pour envoyer une instruction concernant la force de traction auxdits moyens (7a à 7n) pour commander le moteur dudit matériel roulant électrique.

2. Equipement de commande d'un matériel roulant électrique selon la revendication 1, dans lequel lesdits moyens d'entrée (13) sont des moyens de sélection servant à sélectionner l'une quelconque d'une pluralité de conditions de charge.

3. Equipement de commande d'un matériel roulant électrique selon la revendication 1 ou 2, dans lequel lesdits moyens d'entrée (13) sont un clavier.

4. Equipement de commande d'un matériel roulant électrique selon la revendication 1 ou 2, dans lequel lesdits moyens d'entrée (13) sont équipés de moyens de mémoire, dans lesquels la condition de charge a été introduite par avance avant le fonctionnement dudit matériel roulant électrique.

5. Equipement de commande d'un matériel roulant électrique selon la revendication 4, dans lequel lesdits moyens de mémoire (3) sont des moyens de mémoire d'un système à carte pourvu d'un circuit intégré.

6. Equipement de commande d'un matériel roulant électrique selon la revendication 1 à 4, dans lequel lesdits moyens d'entrée (13) sont prévus sur le pupitre de l'opérateur dans ledit matériel roulant électrique.

7. Equipement de commande d'un matériel roulant électrique selon la revendication 1, comprenant
des moyens (2a à 2n, CT) pour détecter une vitesse et un courant principal du moteur d'un matériel roulant électrique pendant le déplacement ; et
des moyens (301, 302, 304, 305, 306) pour recevoir cette valeur détectée et calculer la charge devant être tractée par ce matériel roulant électrique.

FIG. 1

# FIG. 2

# FIG. 4

FIG. 3(a)

FIG. 3(b)

# FIG. 5

13

| SINGLE LOCOMOTIVE | LIGHT LOAD | INTERMEDIATE LOAD | HEAVY LOAD | GRADIENT START |
|---|---|---|---|---|

13a 13b 13c 13d 13e

# FIG. 6

101 — LOAD CONDITION W IS INPUTTED BY KEYBOARD OR IC CARD

102 — $\dfrac{\text{LOAD CONDITION W}}{\text{SINGLE LOCOMOTIVE LOAD CONDITION A}}$

103 —

TRACTIVE FORCE

O          SPEED

# F I G. 7

201 — **LOAD CONDITION W IS INPUTTED BY KEYBOARD OR IC CARD**

202 — LOAD CONDITION W ≥ GRADIENT START LOAD CONDITION E

→ Y → **GRADIENT START PATTERN E IS SELECTED** — 206

↓ N

203 — LOAD CONDITION W ≥ HEAVY LOAD LOAD CONDITION D

→ Y → **HEAVY LOAD PATTERN D IS SELECTED** — 207

↓ N

204 — LOAD CONDITION W ≥ INTERMEDIATE LOAD LOAD CONDITION C

→ Y → **INTERMEDIATE LOAD PATTERN C IS SELECTED** — 208

↓ N

205 — LOAD CONDITION W ≥ LIGHT LOAD LOAD CONDITION B

→ Y → **LIGHT LOAD PATTERN IS SELECTED** — 209

↓ N

210 — **SINGLE LOCOMOTIVE PATTERN A IS SELECTED**

## FIG. 8

## FIG. 10

FIG. 9

EP 0 374 960 B1

# FIG. 11

44

(TRACTIVE FORCE)

O

(BRAKE FORCE)

1    2    3    4    5    6